# EUROPÄISCHE PATENTSCHRIFT

(11) **EP 0 643 649 B1**
(45) Veröffentlichungstag und Bekanntmachung des Hinweises auf die Patenterteilung: **15.10.1997**
(21) Anmeldenummer: 93912895.5
(22) Anmeldetag: 04.06.1993
(51) Int. Cl.: B60S 1/16

(54) **ANTRIEBSVORRICHTUNG EINES SCHEIBENWISCHERS FÜR EIN KRAFTFAHRZEUG**
DRIVE DEVICE FOR A MOTOR VEHICLE WINDSCREEN WIPER
DISPOSITIF D'ENTRAINEMENT D'ESSUIE-GLACE POUR VEHICULE AUTOMOBILE

(30) Priorität: 13.06.1992 DE 4219480
(43) Veröffentlichungstag der Anmeldung: 22.03.1995
(73) Patentinhaber: ITT Automotive Europe GmbH, 60488 Frankfurt (DE)
(72) Erfinder: KLAR, Josef, D-7121 Löschgau (DE)
(74) Vertreter: Hebing, Norbert
(86) Internationale Anmeldenummer: EP9301423
(87) Internationale Veröffentlichungsnummer: WO9325415

(56) Entgegenhaltungen:
- DE-A- 1 480 295
- DE-A- 2 655 078
- DE-A- 3 405 299
- FR-A- 2 240 622
- US-A- 3 090 068

## Beschreibung

Die Erfindung bezieht sich auf eine Antriebsvorrichtung eines Scheibenwischers für ein Kraftfahrzeug mit den Merkmalen des Oberbegriffes des Patentanspruches 1. Eine derartige Antriebsvorrichtung ist aus der DE-A-34 05 299 bekannt und umfasst ein angetriebenes Schneckenrad, an dem exzentrisch ein Ende eines kniehebelartigen Kurbeltriebs angelenkt ist. Das Schneckenrad weist in radialer Richtung mehrere Befestigungspositionen für den Kurbeltrieb auf. Jede Änderung der radialen Position des Kurbeltriebs führt nicht nur zu einer Wischwinkeländerung, sondern zwangsläufig zu einer Schwenkbewegung des Kurbeltriebs um die Scheibenwischer-Schwenkachse, sodaß die Parkstellung des Wischarmes verändert wird. Nach einer Wischwinkeländerung ist es deshalb nötig, den Wischarm in der gewünschten Parkstellung an der Wischerwelle zu befestigen.

Ferner ist aus der DE-A-26 55 078 eine Antriebsvorrichtung bekannt geworden, welche ein an einem Zahnrad befestigtes Einstellblech zur Veränderung des Wischwinkels aufweist. Zwar bleibt die Funktion eines elektrischen Endlagenschalters für den Motor von einer Änderung des Wischwinkels unbeeinflußt, aber die Position der Parkstellung des Wischarmes wird verändert, weil eine jede Verstellung des Einstellbleches entlang einer Kurve zu einer Schwenkbewegung des Kurbeltriebes um die Wischerwelle führt. Folglich ist auch bei dieser Vorrichtung eine nachträgliche Korrektur notwendig.

Der Erfindung liegt daher die Aufgabe zugrunde, eine Antriebsvorrichtung bereitzustellen, welche eine separate Einstellmöglichkeit des Wischwinkels und unabhängig davon eine separate Einstellmöglichkeit des Parkstellung des Wischarmes erlaubt.

Zur Lösung dieser Aufgabe wird erfindungsgemäß vorgeschlagen, daß das angetriebene Rad wenigstens zweiteilig ausgebildet ist, wobei das erste Teil vom Motor antreibbar, daß das zweite Teil des angetriebenen Rads mit dem ersten Teil in wenigstens zwei, im Winkel gegeneinander versetzten Lagen verbindbar ist und zumindest zwei um vorzugsweise diesen Winkel versetzte, von der geometrischen Achse des ersten Teils unterschiedliche weit entfernte Anlenkstellen für den Kurbeltrieb aufweist.

Bei allen nachfolgenden Ausführungen ist das erste Teil stets das Teil des Zahnrads, welches die Zähne trägt. Diese stehen im Falle eines Schneckenradantriebs mit der angetriebenen Schnecke im Eingriff. Wenn also das zweite Teil dieses zweiteiligen Zahnrads zwei oder drei Anlenkstellen hat, so kann man den Kurbeltrieb an einer dieser zwei oder drei Stellen anlenken, deren radialer Abstand von der geometrischen Achse des ersten Teils selbstverständlich verschieden ist. Entsprechendes gilt bei noch mehr Anlenkstellen bspw. bei vier Anlenkstellen, wie sie das Ausführungsbeispiel der Erfindung zeigt. Zur Bereitstellung einer bestimmten Parkstellung bei gegebenem Wischwinkel sind die beiden Teile versetzt zueinander verbindbar. Weil die beiden Teile des angetriebenen Zahnrads in mehreren Relativstellungen miteinander verbindbar sind, ermöglicht dies nicht nur unterschiedliche Wischwinkel, sondern auch die Einhaltung einer genau vorgegebenen Parkstellung. Nimmt man an Stelle einer ersten Anlenkstelle eine hierzu im 90° versetzte zweite Anlenkstelle, so muß das zweite Teil in diesem Falle gegenüber dem ersten um 90° gedreht werden, so daß die beiden Anlenkstellen in Umfangsrichtung des ersten Teils gesehen gleich angeordnet sind, jedoch mit dem Unterschied, daß sie radial von der geometrischen Achse des ersten Teils jeweils einen anderen Abstand haben.

Man kann allerdings dieses Zahnrad auch für eine Antriebsvorrichtung verwenden die keine bestimmte Parkstellung verlangt. In diesem Falle muß dann das zweite Teil gegenüber dem ersten nicht versetzt werden, wenn man statt der einen irgendeine andere Anlenkstelle wählt.

Bei einer verstellbaren Anlenkstelle muß selbstverständlich dafür gesorgt werden, daß nach dem genauen Einstellen ein unerwünschtes Verstellen verhindert wird, d.h. die Verbindung darf sich nach dem Einstellen auch bei den auftretenden Belastungen von selbst nicht lösen. Bei einer stufenlosen Verstellung kann die Exzentrizität innerhalb der vorgegebenen Grenzen beliebig geändert werden. Falls eine Verstellung in Stufen vorgesehen ist, so sind zumindest zwei unterschiedliche Einstellungen möglich.

Eine weitere Ausgestaltung der Erfindung beschreibt Anspruch 2. Es handelt sich dabei um das erste der gezeichneten und nachstehend noch beschriebenen Ausführungsbeispiele der Erfindung. Die Kreuzform bietet sich insbesondere deshalb an, weil im Falle eines Umsetzens der Winkel genau eingehalten werden kann, ohne daß es hierzu besonderer Messeinrichtungen o. dgl. bedarf. Das kreuzförmige zweite Teil, aber auch ein als Mehrkant ausgebildetes zweites Teil, kann bei entsprechender Ausbildung vorzugsweise beider Teile rasch, problemlos und genau gegenüber dem ersten Teil ausgerichtet werden.

Dies gilt insbesondere, wenn die Antriebsvorrichtung gemäß Anspruch 3 ausgebildet ist. Das Fixieren und Ausrichten kann mit Hilfe der verschiedenen Arme leicht bewerkstelligt werden, wobei es ausreicht, wenn am ersten Teil ein Element vorhanden ist, das wahlweise mit einem der Gegenelemente an den vier Armen zusammenwirkt.

Eine andere Lösung der Aufgabe beschreitet Anspruch 4. Demnach wird die Aufgabe im wesentlichen dadurch gelöst, daß das zweite Teil des angetriebenen Rads als in radialer Richtung am ersten Teil abnehmbarer sowie verschieb- und feststellbarer Schieber ausgebildet ist. Der Schieber ermöglicht eine stufenlose Veränderung der Exzentrizität des zahnradseitigen Endes des kniehebelartigen Kurbeltriebs. Dabei kann man den Verstellbereich quasi dadurch noch vergrößern, daß man in Verschieberichtung gesehen zumindest zwei unterschiedliche Anlenkpunkte für das Kniegelenk vorsieht oder den Schieber abnimmt und in einer um 180° gedrehten Lage wieder aufsetzt.

Der Schieber weist in sehr vorteilhafter Art zwei seitliche Befestigungslappen mit je einem sich in Verschieberichtung erstreckenden Langloch auf, welches von einem Befestigungselement durchsetzt ist. Die Länge des Langlochs begrenzt in Verbindung mit der Dicke des Befestigungselements, wobei es sich vorzugsweise um eine Schraube handelt, den maximalen Verschiebe oder Verstellweg des zweiten Teils gegenüber dem ersten. Im Falle von Schrauben als Befestigungselemente werden diese in Gewinde des ersten Teils eingedreht und der Schraubenkopf besorgt direkt oder indirekt das Anpressen des zweiten Teils an das erste nach vorangegangener Radialverschiebung. Die beiden Befestigungselemente müssen aber nicht notwendigerweise zugleich auch Anschlagelemente in den Endstellungen sein, vielmehr kann man den Verschiebebereich auch an anderer Stelle begrenzen.

Eine andere Ausbildung der Erfindung sieht vor, daß das erste Teil des angetriebenen Rads ein Anschlag und/oder Einstellelement aufweist, das in eine Aufnahme des zweiten Teils eingreift. Falls es sich um ein reines Anschlagelement handelt, so brauchen die Befestigungselemente die Funktion von Endanschlägen nicht zu übernehmen. Wenn es sich dagegen um ein reines Einstellelement handelt, so wird dieses selbstverständlich zu Anschlagzwecken nicht herangezogen, sondern nur zur Einstellung der Exzentrizität der Anlenkstelle für den kniehebelartigen Kurbeltrieb. Trotzdem schließt dies natürlich nicht aus, daß zumindest in einer der beiden Verschiebeendstellungen das Einstellelement die Verschiebebewegung des zweiten Teils begrenzt bzw. beendigt.

Eine bevorzugte Weiterbildung dieser Variante ergibt sich aus Anspruch 7. Die Einstellskala oder -skalen beschriftet man zweckmäßigerweise so, daß man mit ihrer Hilfe unmittelbar die Exzentrizität einstellen kann, d.h. sie geben das Maß an, um welches bei der jeweiligen Einstellung die beiden geometrischen Achsen in radialer Richtung voneinander entfernt sind. Falls man in vorteilhafter Weise das zweite Teil umsetzbar am ersten Teil anbringt, kann man die Skalen auch asymmetrisch ausbilden, wobei sich dann in der Mitte jeweils der kleinste Wert und beidseits davon die größeren Werte bis hin zu den beiden Maximalwerten befinden.

Weitere Ausgestaltungen dieser Erfindung ergeben sich aus den Unteransprüchen sowie der nachstehenden Beschreibung verschiedener Ausführungsbeispiele. Die Zeichnung zeigt diese Ausführungsbeispiele. Hierbei stellen dar:
- Figur 1: eine Draufsicht auf die Antriebsvorrichtung eines Scheibenwischerantriebs eines Kraftfahrzeugs bei abgenommenem Gehäusedeckel;
- Figur 2: in vergrößertem Maßstab das Rad der Antriebsvorrichtung aus Figur 1 in um 90° weitergedrehter Lage;
- Figur 3: einen Schnitt gemäß der Linie III-III der Figur 2;
- Figur 4: eine der Figur 2 entsprechenden Darstellung einer anderen Ausführungsform der Erfindung;
- Figur 5: eine der Figuren 2 bzw. 4 entsprechende Darstellung einer dritten Variante der Erfindung;
- Figur 6: einen Schnitt gemäß der Linie VI-VI der Figur 5;
- Figur 7: eine gegenüber Figur 3 etwas abgewandelte Ausführungsform.

Von einem Elektromotor 1 bekannter Bauart wird eine Schnecke 2 eines Schneckgetriebes angetrieben, die ihrerseits das zugehörige, vorzugsweise als Schneckenrad ausgebildete Rad 3 in Drehung versetzt. Diese Drehbewegung wird mit Hilfe eines kniehebelartigen Kurbeltriebs 4 in eine Pendelbewegung einer Wischerwelle 5 umgesetzt. Der Kurbeltrieb 4 besteht seinerseits aus der Kurbel 6 und der Lasche 7. Beide sind über ein Drehgelenk 8 miteinander verbunden. Das gelenkferne Ende der Kurbel 6 ist an einer Anlenkstelle 9 mittels eines weiteren Drehgelenks mit dem Rad 3 bzw. Schneckenrad antriebsverbunden. Demgegenüber ist das gelenkferne Ende der Lasche 7 direkt oder indirekt drehfest mit der Wischerwelle 5 gekuppelt. Wenn man also das Schneckenrad im Sinne des Pfeils 10 mit Hilfe des Elektromotors 1 antreibt, so führt dies zu der Pendelbewegung der Wischerwelle 5 im Sinne des Doppelpfeils 11. Am freien Ende der Wischerwelle befindet sich der Wischarm, welcher das Wischblatt trägt, das die Scheibe eines Kraftfahrzeugs wischt.

Es ist leicht einzusehen, daß der Wischwinkel 11 von den geometrischen Abmessungen dieses Antriebs abhängt, wobei er sich ändert, wenn man bspw. die Anlenkstelle 9 am Rad 3 bzw. Schneckenrad ändert.

Wenn man nun erfindungsgemäß mehrere, wahlweise benutzbare Anlenkstellen 9 am Rad 3 bzw. Zahnrad oder Schneckenrad vorsieht, so kann man auf diese Weise ohne Verwendung anderer Teile den Wischwinkel 11 verändern.

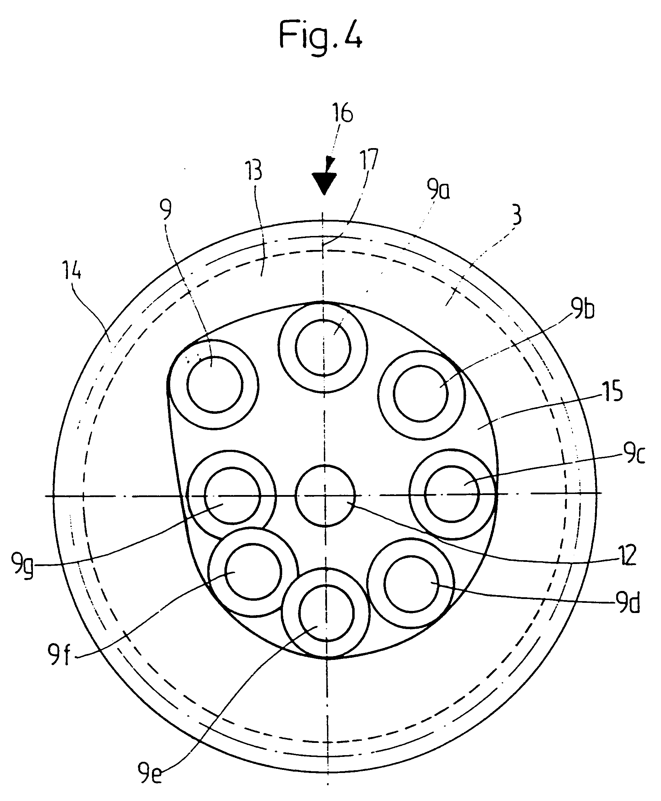

In Figur 4 ist in vergrößertem Maßstab ein Rad 3 dargestellt, welches acht wahlweise benutzbare Anlenkstellen 9 bis 9g aufweist. Ihr radialer Abstand von der Lagerwelle 12 dieses Zahnrads nimmt ausgehend von der Anlenkstelle 9 zur Anlenkstelle 9g hin in Stufen ab. Wenn man für den Wischerarm und damit auch das Wischblatt keine besondere Parkstellung einhalten muß, so kann man die Kurbel 6 mit jeder dieser Anlenkstellen verbinden ohne irgendetwas Spezielles beachten zu müssen. Ist aber eine besondere Parkstellung verlangt, so kann man die Anlenkstellen 9 bis 9g an diesem Rad 3 nicht einfach in Form von Bohrungen anbringen, vielmehr ist es notwendig, dieses Rad zweiteilig anzubilden, wobei sich dann am ersten Teil 13 die Verzahnung 14 befindet und an einem zweiten, verdreh- oder umsetzbar mit dem ersten Teil verbundenen Teil 15 die Anlenkstellen 9 bis 9g bspw. in Form von Bohrungen. Wenn das Rad 3 gegenüber einer in Figur 4 symbolisch dargestellten Marke 16 ausgerichtet ist, die in diesem Falle einem Radius 17 gegenübersteht, so muß man das zweite Teil so drehen, daß die gewünschte Anlenkstelle bzw. ihre geometrische Mitte auf diesem Radius 17 zu liegen kommt. In diesem Falle ist dann gewährleistet, daß der Antrieb die verlangte Parkstellung für den Wischarm gewährleistet.

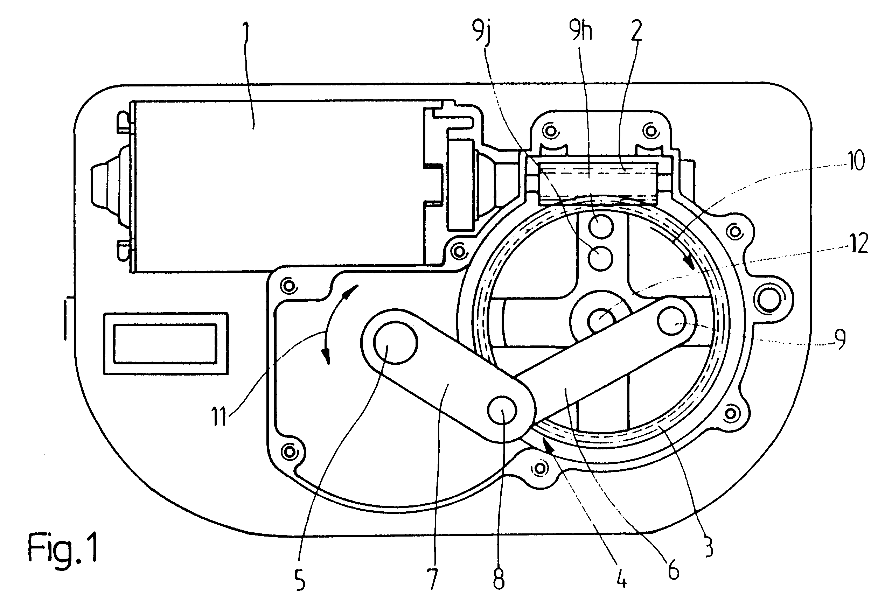

Die Figuren 1 und 2 sowie Figur 5 zeigen zwei weitere Ausführungsbeispiele der Erfindung. Gemäß Figur 1 können zwei wahlweise benutzbare Anlenkstellen 9h und 9j durchaus in radialer Richtung gegeneinander versetzt werden, so daß man ohne Veränderung der Parkstellung die Kurbel 6 einfach umsetzen kann, wenn sie zuvor an einer dieser beiden Anlenkstellen angelenkt war und nun ein anderer Wischwinkel erreicht werden soll. Im anderen Falle, d.h. bei Anlenkung an einem anderen Arm muß eine entsprechende Drehung bspw. um 90° vorgenommen werden.

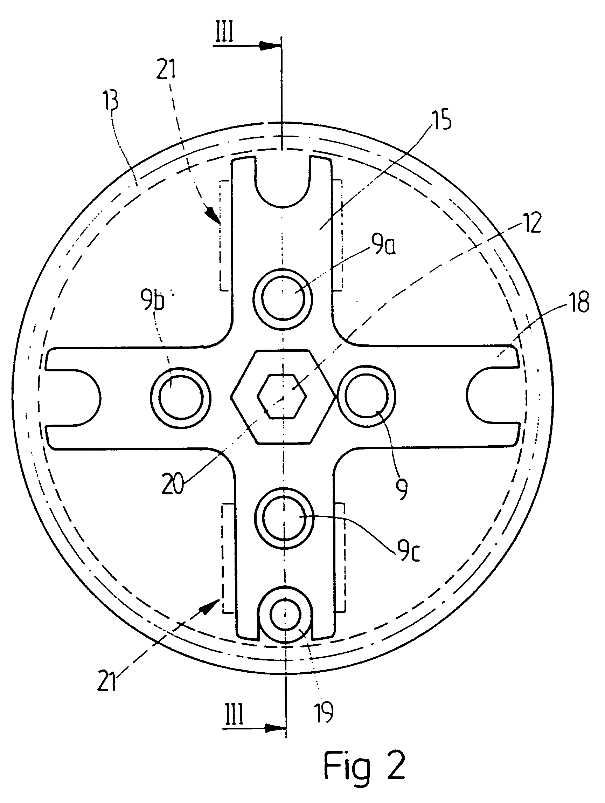

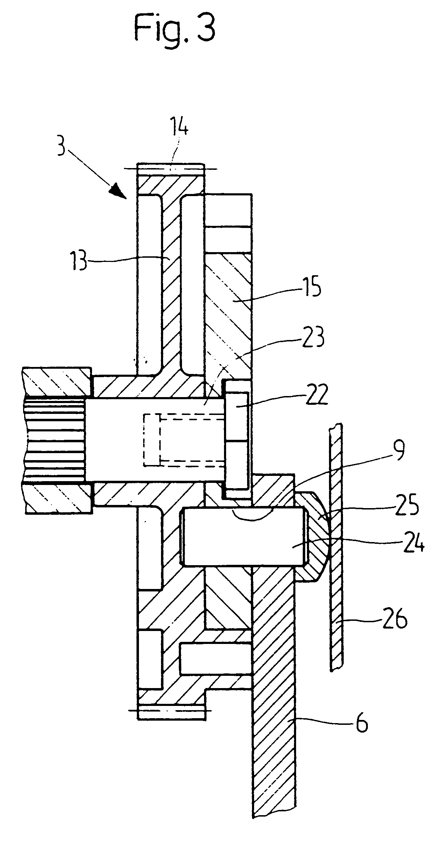

Beim Ausführungsbeispiel der Figuren 1 und 2 kann das zweite Teil 15 gegenüber dem ersten Teil 13 in vier jeweils um 90° versetzten Stellungen montiert werden. Das zweite Teil 15 hat dort eine Kreuzform. Jeder Arm dieses Kreuzes kann bei einer Ausführung mit Parkstellung gegenüber dem ersten Teil 13 bspw. dadurch exakt ausgerichtet werden, daß er an seinem freien Ende 18 gabelartig gestaltet ist und dieser Arm in der Benutzungslage mit einer Rolle 19 od. dgl. zusammenwirkt. Jeder Arm trägt bei dieser Variante eine Anlenkstelle 9 bis 9c, deren radialer Abstand von der geometrischen Achse 20 der Lagerwelle 12 unterschiedlich groß ist. Wenn man am ersten Teil 13 eine oder mehrere Aufnahmen 21 vorsieht, so kann man mit deren Hilfe auch eine exakte Ausrichtung und Drehfixierung des zweiten Teils 15 am ersten Teil 13 erreichen. Eine solche Aufnahme 21 kann man bspw. durch zwei parallele Leisten bilden, deren Abstand der Breite eines Arms entspricht. Selbstverständlich müssen das erste und das zweite Teil gegeneinander nicht nur fixiert, sondern auch fest miteinander verbunden werden. Dies gilt insbesondere aufgrund der Schwellbelastung dieses Teils. Hierzu dient gemäß Figur 3 bspw. eine Schreibe 22, welche in das Muttergewinde eines Bolzens 23 eingeschraubt wird. In die als Bohrung ausgebildete Anlenkstelle 9 ist bei diesem Ausführungsbeispiel ein Bolzen 24 eingesetzt, in welchen das zugeordnete Ende der Kurbel 6 eingehängt werden kann. Am freien Ende trägt dieser Bolzen 24 eine Kappe 25, welche im Betrieb an einem Deckel 26 oder einem Haltebügel od. dgl. unterhalb eines Getriebedeckels anliegt, der in Figur 1 abgenommen ist und den ganzen Antrieb in bekannter Weise überdeckt.

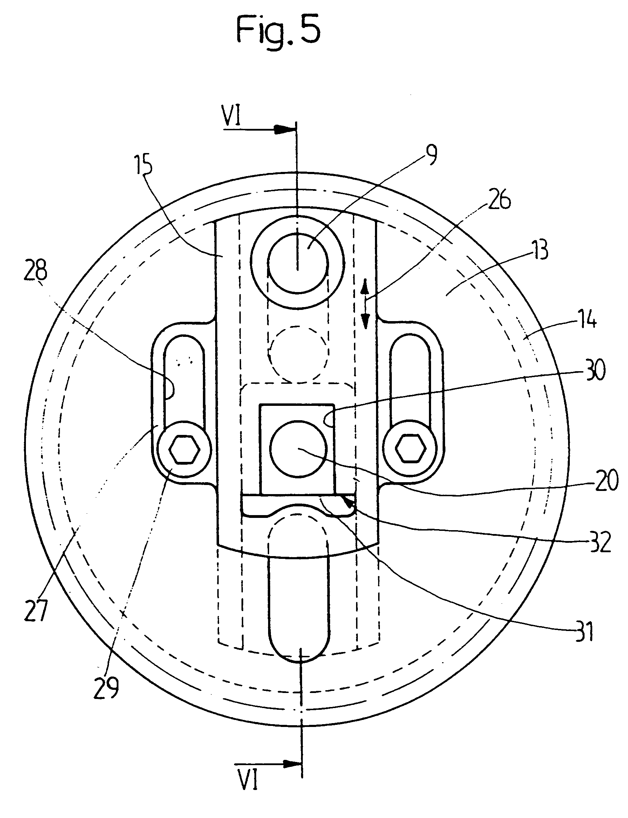

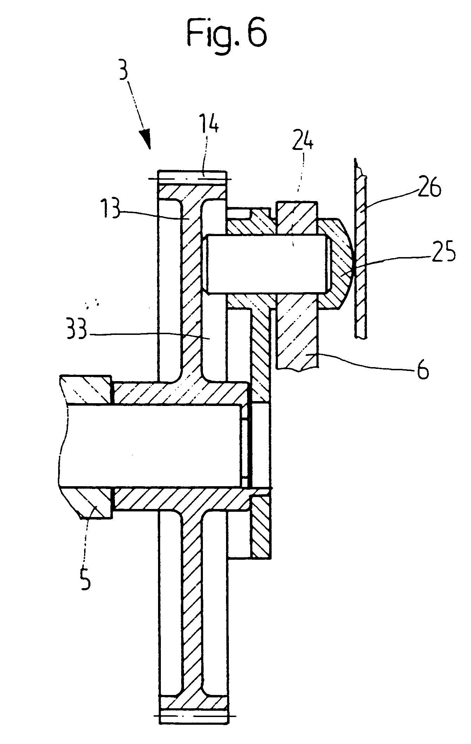

Während bei den vorerwähnten Varianten eine Versetzung in Stufen möglich ist, sieht das Ausführungsbeispiel der Figuren 5 und 6 eine stufenlose Verstellung der Anlenkstelle 9 vor. Auch hierbei findet ein zweigeteiltes Rad 3 Anwendung. Am ersten Teil 13 ist das zweite, als Schieber ausgebildete Teil 15 in radialer Richtung, d.h. im Sinne des Doppelpfeils 26 verschieb- und feststellbar. Selbstverständlich ist auch eine entsprechende Schiebeführung vorhanden. Diese kann bspw. durch zwei seitliche Befestigungslappen 27 gebildet werden, die jeweils ein sich in Verschieberrichtung erstreckendes Langloch aufweisen. Durch dieses hindurch greift ein Befestigungselement, bspw. der Schaft einer Befestigungsschraube 29, welche in ein Muttergewinde des ersten Teils eingedreht wird. Die maximale Verschiebestrecke ist demnach durch die Länge des Langlochs und den Durchmesser des Schraubenschafts festgelegt. Im übrigen kann man dieses zweite Teil 15 abnehmen und in einer um 180° gedrehten Lage wieder aufsetzen. Aufgrund einer asymmetrischen Ausbildung im Mittelbereich kann man auf diese Weise nochmals eine Veränderung der Anlenkstelle gegenüber der geometrischen Drehachse 20 des Rads 3 erzielen.

Das zweite Teil 15 besitzt nämlich bei dieser Ausführungsform einen mittigen, fensterartigen Durchbruch 30 mit sich in Verschieberichtung erstreckenden Längskanten und senkrecht dazu stehenden Querkanten. An einer der letzteren ist eine senkrecht zur Bildebene vorstehende Leiste 31 des ersten Teils 13 in einer Verschiebeendstellung anlegbar. Sie kann zugleich auch eine Einstellmarke bilden, die in Verbindung mit einer oder zwei Einstellskalen 32 für die Einstellung der Anlenkstelle 9 herangezogen werden können. Gemäß Figur 6 trägt auch bei diesem Ausführungsbeispiel das überstehende freie Ende des Lagerbolzens 24 eine Kappe 25, welche an der Innenfläche des Deckels 26 abstützend entlanggleiten kann. Das innere Bolzenende steht gegen des erste Teil 13 hin vor und greift dort in eine sich in radialer Richtung erstreckende Nut 33 des ersten Teils 13 ein.

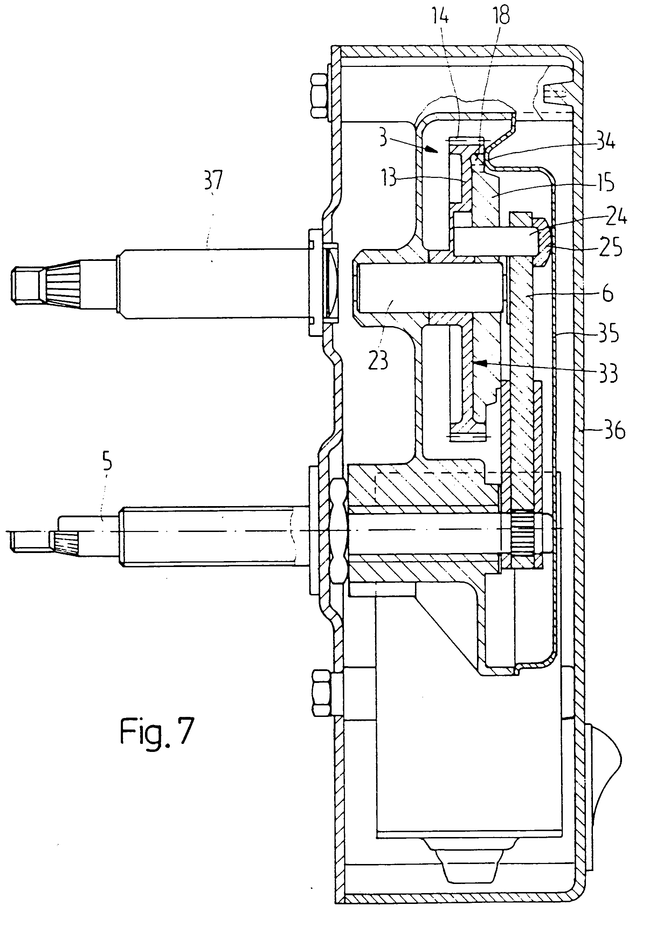

In Figur 7 ist eine mit Figur 3 vergleichbare, gegenüber dieser aber abgewandelte weitere Ausführungsform zu sehen. Das Rad 3, welches bevorzugterweise wiederum ein Schneckenrad ist, hat einen sich aus den Figuren 3 oder 7 ergebenden Querschnitt d.h., zur Gewichtsreduzierung ist der mittlere Bereich dünner. Dadurch entsteht eine Vertiefung 33, in welcher man das zweite Teil 15 versenkt unterbringen kann. Es reduziert sich auf diese Weise die Gesamtdicke aus dem ersten Teil 13 und dem zweiten Teil 15. Ähnlich wie in Figur 2 kann man das zweite Teil 15 an seinem freien Ende 18 gabelartig ausbilden und dementsprechend quasi an der Rückseite oder Innenseite der Verzahnung 14 radial gegen den Bolzen 23 hin ragende Vorsprünge vorsehen, die am ersten Teil 13 angeformt sind und den Rollen 19 od. dgl. der Figur 2 entsprechen. Falls ein sternförmiges zweites Teil 15 mit vier Armen vorgesehen ist, sind selbstverständlich dementsprechend auch vier jeweils um 90° versetzte, nach innen ragende Vorsprünge am ersten Teil 13 angebracht bzw. angeformt. Im Bereich dieser formschlüssigen Verbindung ist das zweite Teil 15 nur etwa halb so dick. Außerdem befindet sich dort eine Sicke 34 eines Bügels 35 oder inneren Deckels, welche die Verbindung des ersten und zweiten Teils gegen Ausheben sichert. Das Getriebe ist mit Hilfe eines Deckels bzw. weiteren Deckels 36 nach außen hin veschlossen.

Außer der Wischerwelle 5 ist bei dieser Ausführungsform der Antriebsvorrichtung noch eine Zusatz-Wischerwelle 37 vorhanden, deren freies Ende einen Zusatz-Wischarm aufnimmt, so daß insgesamt ein Parallellenkerantrieb für das Wischerblatt gegeben ist.

## Patentansprüche

1. Antriebsvorrichtung eines Scheibenwischers für ein Kraftfahrzeug, mit einem von einem Motor (1) angetriebenen Rad (3), insbesondere Zahnrad, an dem exzentrisch das eine Ende eines kniehebelartigen Kurbeltriebs (4) angelenkt ist, dessen anderes Ende drehfest mit der Wischerwelle verbunden ist, wobei das angetriebene Rad (3) wenigstens zwei wahlweise verwendbare Anlenkstellen (9 bis 9j) für den Kurbeltrieb (4) oder zumindest eine gegenüber der Drehachse (12) in radialer Richtung des Rads (3) verstellbare Anlenkstelle (9) oder eine Kombination aus beidem aufweist, **dadurch gekennzeichnet,** daß das angetriebene Rad (3) wenigstens zweiteilig ausgebildet ist, wobei das erste Teil (13) vom Motor (1) antreibbar ist, daß das zweite Teil (15) des angetriebenen Rads (3) mit dem ersten Teil (13) in wenigstens zwei, im Winkel gegeneinander versetzten Lagen verbindbar ist und zumindest zwei um vorzugsweise diesen Winkel versetzte, von der geometrischen Achse (20) des ersten Teils (13) unterschiedlich weit entfernte Anlenkstellen (9 bis 9j) für den Kurbeltrieb (4) aufweist.

2. Antriebsvorrichtung nach Anspruch 1, **dadurch gekennzeichnet**, daß das zweite Teil (15) in der Art eines Mehrkants oder Kreuzes ausgebildet ist und jeder Arm des Kreuzes bzw. jedes Segment des Mehrkants zumindest eine Anlenkstelle (9 bis 9j) für den Kurbeltrieb (4) aufweist.

3. Antriebsvorrichtung nach Anspruch 2, **dadurch gekennzeichnet,** daß das zweite Teil (15) ein vierarmiges Kreuz mit vorzugsweise jeweils um 90° gegeneinander versetzten Armen ist, wobei zumindest ein Arm gegenüber dem ersten Teil (13) ausricht- und fixierbar ist.

4. Antriebsvorrichtung eines Scheibenwischers für ein Kraftfahrzeug, mit einem von einem Motor (1) angetriebenen Rad (3), insbesondere Zahnrad, an dem exzentrisch das eine Ende eines kniehebelartigen Kurbeltriebs (4) angelenkt ist, dessen anderes Ende drehfest mit der Wischerwelle verbunden ist, wobei das angetriebene Rad (3) wenigstens zwei wahlweise verwendbare Anlenkstellen (9 bis 9j) für den Kurbeltrieb (4) oder zumindest eine gegenüber der Drehachse (1) in radialer Richtung des Rads (3) verstellbare Anlenkstelle (9) oder eine Kombination aus beidem aufweist, **dadurch gekennzeichnet,** daß das angetriebene Rad (3) wenigstens zweiteilig ausgebildet ist, wobei das erste Teil (13) vom Motor (1) antreibbar und das zweite Teil (15) mit zumindest einer Anlenkstelle (9 bis 9j) für den Kurbeltrieb (4) versehen ist, und daß das zweite Teil (15) des angetriebenen Rads (3) als in radialer Richtung am ersten Teil (13) abnehmbarer sowie verschieb- und feststellbarer Schieber ausgebildet ist.

5. Antriebsvorrichtung nach Anspruch 4, **dadurch gekennzeichnet,** daß der Schieber (15) zwei seitliche Befestigungslappen (27) mit je einem sich in Verschieberichtung (26) erstreckenden Langloch (28) aufweist, welches von einem Befestigungselement (29) durchsetzt ist.

6. Aritriebsvorrichtung nach Anspruch 4 oder 5, **dadurch gekennzeichnet,** daß das erste Teil (13) des angetriebenen Rads (3) ein Anschlag- und/oder Einstellelement (31) aufweist, das in eine Aufnahme (30) des zweiten Teils (15) eingreift.

7. Antriebsvorrichtung nach Anspruch 6, **dadurch gekennzeichnet,** daß das Einstellelement eine quer zur Ebene des angetriebenen Rads (3) vorstehende Leiste (31) od. dgl. Element und die Aufnahme ein Fenster (30) entsprechender Größe ist, wobei sich an zumindest einem der sich in Verschieberichtung (26) erstreckenden Ränder des Fensters eine Einstellskala (32) befindet.

8. Antriebsvorrichtung nach wenigstens einem der Ansprüche 4 bis 7, **dadurch gekennzeichnet,** daß das innere Ende eines Lagerbolzens (24) für das zugeordnete Ende des Kurbeltriebs (4) über das zweite Teil (15) vorsteht und in eine radiale Nut des ersten Teils eingreift.

## Claims

1. Driving mechanism of a windscreen wiper for an automotive vehicle comprising a wheel (3), in particular, a toothed gear, driven by a motor (1), wherein one end of a toggle lever-type crank drive (4) is eccentrically hinged to the toothed gear, and the other end of the drive is connected to the wiper shaft in a non-rotating manner, wherein the actuated wheel (3) comprises at least two selectively used hinge points (9 through 9j) for the crank drive (4) or at least one hinge joint (9) adjustable with respect to the axis of rotation (12) in a radial direction of the wheel (3), or a combination thereof,
**characterized** in that the actuated wheel (3) is of an at least bipartite design, with the first part (13) being drivable by the motor (1), in that the second part (15) of the actuated wheel (3) can be connected to the first part (13) in at least two positions staggered with respect to one another at an angle, and in that it comprises at least two hinge points (9 through 9j) for the crank drive (4) staggered preferably by that angle and being differently spaced from the geometric axis (20) of the first part (13).

2. Driving mechanism as claimed in claim 1,
**characterized** in that the second part (15) is of a multiple-edge-type or cross-shaped configuration and that each arm of the cross or each segment of the multiple-edge configuration includes at least one hinge joint (9 through 9j) for the crank drive (4).

3. Driving mechanism as claimed in claim 2,
**characterized** in that the second part (15) is a four-arm cross having arms preferably offset with respect to one another by 90°, with at least one arm being orientable or fixable with respect to the first part (13).

4. Driving mechanism of a windscreen wiper for an automotive vehicle comprising a wheel (3), in particular, a toothed gear, driven by a motor (1), wherein one end of a toggle lever-type crank drive (4) is eccentrically hinged to the toothed gear, and the other end of the drive is connected to the wiper shaft in a non-rotating manner, wherein the actuated wheel (3) comprises at least two selectively used hinge points (9 through 9j) for the crank drive (4) or at least one hinge joint (9) adjustable over the axis of rotation (12) in the radial direction of the wheel (3), or a combination thereof,
**characterized** in that the actuated wheel (3) is of an at least bipartite design, the first part (13) being drivable by the motor (1) and the second part (15) including at least one hinge point (9 through 9j) for the crank drive (4), and in that the second part (15) of the actuated wheel (3) is configured as a slide which is removable from, displaceable and fixable on the first part (13) in a radial direction.

5. Driving mechanism as claimed in claim 4,
**characterized** in that the slide (15) includes two lateral mounting tongues (27) each having one elongated slot (28) extending in the direction of displacement and being traversed by a mounting element (29).

6. Driving mechanism as claimed in claim 4 or claim 5,
**characterized** in that the first part (13) of the actuated wheel (3) includes a stop and/or adjusting element (31) engaging an accommodating means (30) of the second part (15).

7. Driving mechanism as claimed in claim 6,
**characterized** in that the adjusting element is a band (31) or a like element projecting in a direction transverse to the plane of the actuated wheel (3), and that the accommodating means is a window (30) of a corresponding size, with an adjusting scale (32) being provided on at least one of the edges of the window extending in the direction of displacement (26).

8. A driving mechanism as claimed in at least one of claims 4 to 7,
**characterized** in that the inner end of a bearing bolt (24) for the associated end of the crank drive (4) protrudes beyond the second part (15) and is in engagement with a radial groove of the first part.

## Revendications

1. Dispositif d'entraînement d'essuie-glace pour véhicule automobile, comprenant une roue (3), notamment une roue dentée, qui est entraînée par un moteur (1) et sur laquelle est articulée d'une manière excentrée la première extrémité d'un mécanisme à manivelle (4) du type genouillère dont l'autre extrémité est calée sur l'arbre d'essuie-glace, la roue entraînée (3) comportant au moins deux emplacements (9 à 9j), utilisables au choix, d'articulation du mécanisme à manivelle (4) ou au moins un emplacement d'articulation (9) réglable en position suivant la direction radiale de la roue (3) vis-à-vis de l'axe de rotation (12), ou une combinaison des deux, caractérisé en ce que la roue entraînée (3) est réalisée en au moins deux parties, la première partie (13) pouvant être entraînée par le moteur (1), et en ce que la seconde partie (15) de la roue entraînée (3) peut être reliée à la première partie (13) en au moins deux positions décalées d'un certain angle l'une vis-à-vis de l'autre et comporte au moins deux positions (9 à 9j) d'articulation du mécanisme à manivelle (4) qui sont décalées, de préférence dudit angle, et sont espacées de l'axe géométrique (20) de la première partie (13) suivant des distances différentes.

2. Dispositif d'entraînement selon la revendication 1, caractérisé en ce que la seconde partie (15) est réalisée à la façon d'un polygone ou d'une croix et en ce que chaque bras de la croix ou chaque secteur du polygone comprend au moins un emplacement (9 à 9j) d'articulation du mécanisme à manivelle (4).

3. Dispositif d'entraînement selon la revendication 2, caractérisé en ce que la seconde partie (15) est une croix à quatre bras comportant des bras décalés l'un vis-à-vis de l'autre, de préférence respectivement de 90°, au moins un bras étant orientable et immobilisable vis-à-vis de la première partie (13).

4. Dispositif d'entraînement d'essuie-glace pour véhicule automobile, comprenant une roue (3), notamment une roue dentée, qui est entraînée par un moteur (1) et sur laquelle est articulée d'une manière excentrée la première extrémité d'un mécanisme à manivelle (4) du type genouillère dont l'autre extrémité est calée sur l'arbre d'essuie-glace, la roue entraînée (3) comportant au moins deux emplacements (9 à 9j), utilisables au choix, d'articulation du mécanisme à manivelle (4) ou au moins un emplacement d'articulation (9) réglable en position suivant la direction radiale de la roue (3) vis-à-vis de l'axe de rotation (12), ou une combinaison des deux, caractérisé en ce que la roue entraînée (3) est réalisée en au moins deux parties, la première partie (13) pouvant être entraînée par le moteur (1), et la seconde partie (15) est pourvue d'au moins un emplacement (9 à 9j) d'articulation du mécanisme à manivelle (4) et en ce que la seconde partie (15) de la roue entraînée (3) est réalisée sous forme d'un coulisseau qui peut être démonté, ainsi que déplacé et immobilisé, sur la première partie (13) suivant la direction radiale.

5. Dispositif d'entraînement selon la revendication 4, caractérisée en ce que le coulisseau (15) comprend deux ailes latérales de fixation (27) comportant chacune un trou allongé (28) qui est orienté suivant la direction de déplacement (26) et qui est traversé par un élément de fixation (29).

6. Dispositif d'entraînement selon la revendication 4 ou 5, caractérisé en ce que la première partie (13) de la roue entraînée (3) comporte un élément de butée et/ou de réglage en position (31) qui s'emboîte dans un logement (30) de la seconde partie (15).

7. Dispositif d'entraînement selon la revendication 6, caractérisé en ce que l'élément de réglage en position est une nervure (31) ou élément analogue se dressant transversalement au plan de la roue entraînée (3) et en ce que le logement est une fenêtre (30) de dimensions correspondantes, une échelle de réglage en position (32) étant située sur au moins l'un des bords de la fenêtre qui sont orientés suivant la direction de déplacement (26).

8. Dispositif d'entraînement selon au moins l'une des revendications 4 à 7, caractérisé en ce que l'extrémité intérieure d'un goujon (24) servant de palier pour l'extrémité associée du mécanisme à manivelle (4) fait saillie au-delà de la seconde pièce (15) et s'emboîte dans une rainure radiale de la première partie.
